# EUROPEAN PATENT SPECIFICATION

(11) **EP 0 482 021 B1**
(45) Date of publication and mention of the grant of the patent: **19.04.1995**
(21) Application number: 90909579.6
(22) Date of filing: 29.06.1990
(51) Int. Cl.: C01B 13/10, B01J 19/12

(54) **OZONE GENERATOR**
OZONGENERATOR
GENERATEUR D'OZONE

(30) Priority: 29.06.1989 AU 4998/89
(43) Date of publication of application: 29.04.1992
(73) Proprietor: ARTHURSON CORPORATION PTY. LTD., Darling Point, NSW 2027 (AU)
(72) Inventor: Arthurson,Craig John, North Narrabeen NSW 2101 (AU)
(74) Representative: Gallafent, Richard John
(86) International application number: AU9000280
(87) International publication number: WO9100242

(56) References cited:
- EP-A- 0 253 305
- WO-A-83/03408
- FR-A- 0 779 735
- US-A- 2 637 688
- US-A- 4 131 528
- PATENT ABSTRACTS OF JAPAN vol. 012, no. 252 (C-512)15 July 1988
- WORLD PATENTS INDEX Week 7948, Derwent Publications Ltd., London, GB; AN 79-86778B/48
- PATENT ABSTRACTS OF JAPAN vol. 005, no. 204 (C-085)24 December 1981

## Description

### FIELD OF THE INVENTION

This invention concerns an ozone generator. In particular the invention concerns an improved ozone generator of the type which employs ultra-violet light irradiation of air.

### BACKGROUND OF THE INVENTION

There are two common ways of generating ozone. The first employs an "ozinator discharge", and the second, safer method, employs ultra-violet irradiation of the air.

The "ozinator discharge" method involves applying a high voltage alternating current between two closely spaced parallel plate electrodes separated by a layer of insulation such as glass and an air space. The air space is filled with a diffused purple glow called an "ozinator discharge" if the electrode gap is not more than 2 mm to 3 mm. A high current flows and the formation of ozone is directly proportional to the power dissipated in the discharge at a given temperature. 85% to 95% of the electrical energy applied is dissipated as heat and the amount of power which can be applied is severely limited by cooling arrangements. Efficiency is adversely affected by moisture in the supplied air. Concentric tubular electrodes are preferred and corona or brush discharge is avoided as an inefficient way of generating ozone since, at the short air gaps involved, high voltages arcing would occur.

Ozone is also manufactured photochemically by the action of ultra-violet light of wavelengths shorter than about 2200 Angstrom.

Ultra-violet emitting fluorescent lamps are manufactured for this purpose, but although these lamps may nominally be rated to produce 30 grams of ozone per hour, it has been found impossible in practice to obtain more than about 6 grams per hour due to the inefficient operation of the lamp.

An object of the present invention is to provide an ozone generator which avoids or at least ameliorates disadvantages of the prior art.

### DISCLOSURE OF THE INVENTION

According to one aspect the present invention consists in an ozone generator comprising an ultra-violet lamp;
means to direct a flow of an oxygen-containing gas through a zone at which the gas is exposed to ultraviolet radiation emitted from the lamp; and
means to pass the gas through a high voltage low current electric field prior to or during exposure to the ultra-violet radiation.

The oxygen-containing gas may, for example, be air or oxygen. The electric field is desirably applied between widely spaced apart (for example 1 metre apart) electrodes under conditions such that substantially no ozone is generated from the electric field alone when the lamp is not energized.

Surprisingly, it has been found that when air is irradiated by ultra-violet light from the lamp in the presence of the same electric field, the rate of ozone production in preferred embodiments of the invention, is up to ten times greater than the rate of ozone production obtained from the lamp in the absence of the electric field. In preferred embodiments of the invention a plurality of sharpened rod electrodes is positioned at each end of a tube housing an elongate ultra-violet lamp. The plurality of electrodes at one tube end are of opposite polarity to the plurality of electrodes at the other tube end and are spaced apart by from 20 cm to 1 metre or more in distance. An alternating current having a peak potential difference of 15000 volts is applied between them but current flow is small and no discharge is visible. Air at atmospheric pressure or slightly greater pressure is admitted at each end of the tube adjacent the electrodes, and a mixture of air and ozone exits from the tube at an outlet substantially equidistant from the tube ends.

According to a second aspect the invention consists in apparatus according to the first aspect wherein at least one magnet is associated with the lamp so that ionized particles within the lamp are influenced by a magnetic field to congregate in one or more localized regions whereby to concentrate the ultra-violet radiation emanating from the lamp in the zone through which the gas flows.

It has been found that substantial further improvements in production rate of ozone are obtained when magnets are used in conjunction with the high voltage low current electrical field and ultra-violet lamp. The production efficiency is especially increased when at least two magnets are used with like poles facing each other. Desirably, the magnets are electro-magnets and are energized by a pulsating or alternating current. It is believed that the magnets influence ionized particles in the lamp so as to concentrate ultra-violet radiation and thereby allow a more intense irradiation of the air.

### BRIEF DESCRIPTION OF THE DRAWING

The invention will now be described by way of example only with reference to the accompanying drawing, which is a perspective view of an ozone generator embodying the present invention.

### PREFERRED EMBODIMENT OF THE INVENTION

Ozone generator 1 comprises a commercially available elongate quartz tube ultra-violet lamp 2 intended for ozone production. The lamp in the presently described embodiment is a mercury vapour quartz tube of approximately 15 mm diameter and 850 mm length producing ultra-violet radiation of about 900 - 950 nanometres. Lamp 2 is mounted within a perspex tube 3 by means of two cross-shaped mounting brackets 4, fixed within tube 3 by means of self-tapping screws (not shown). In the described embodiment, tube 3 has a wall thickness of 4 mm, a length of 1 metre and an internal diameter of 100 mm.

At one end 10 of tube 3 there is provided an insulated end cap 5 having a boss 6 and flange 7 and which carries a circular array of electrodes 8 electrically connected to a common terminal 20.

At the other end 11 of tube 3 there is a corresponding end cap 5 which carries a circular array of electrodes 9 electrically connected to a common terminal 21.

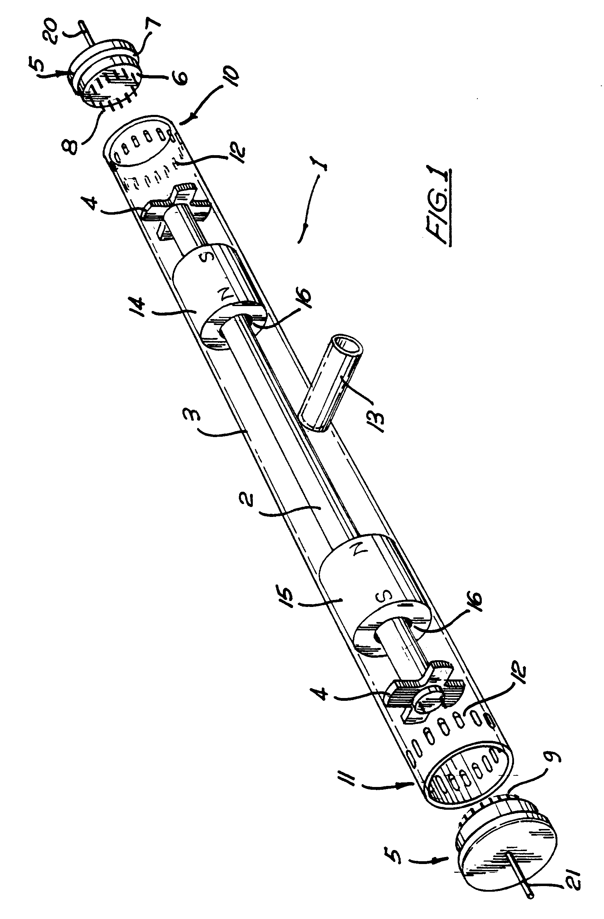

The end caps 5 are shown disassembled from tube 3 for clarity in Figure 1 but when assembled with tube 3 each boss 6 provides a seal with tube 3 and electrodes 8, 9 are then disposed within tube 3 concentrically with respect to the axis of lamp 2 at respective tube ends.

End caps 5 also provide sealed entry for electrical connections (not illustrated) whereby the lamp may be energized, and whereby electromagnets if used may be energized, from an external power supply.

In the presently described embodiment, electrodes 8, 9 are, for example, 2% thoriated tungsten rods 1.2 mm in diameter sharpened to a point and of the kind used for striking an arc in TIG welding apparatus.

In use, a transformer of a kind used to energize neon signs and having a 240 volt primary winding energized from 60 cycle mains and having a 15,000 volt centre tapped secondary winding is used to provide an alternating 60 cycle low current high voltage field between electrodes 8, 9 at opposite ends of tube 3. The centre tap of the transformer is earthed, one side of the secondary winding being connected via terminal 20 to electrodes 8, the other side of the secondary winding being connected via terminal 21 to electrodes 9.

In the preferred embodiment of the invention, the apparatus is further provided, optionally, with magnets 14, 15 which are positioned around portions of lamp 2 adjacent either end.

Magnets 14, 15 may be permanent magnets or electromagnets but desirably are pulsed electromagnets. It has been found that a significant improvement in production rate is obtained when at least two magnets are used and these are disposed with like polarity poles facing each other as illustrated in Figure 1. The optimum pulse frequency may be determined by simple experiment.

Adjacent each end 10, 11 of tube 3 is a plurality of circumferentially arranged air inlet orifices 12, which may be round, slotted, or any other convenient shape. Intermediate tube ends 10, 11 and preferably approximately equidistant from each tube end, an outlet 13 allows the ozone enriched air to exit the apparatus.

The internal diameter of magnets 14, 15, is made slightly larger than the external diameter of lamp 2 so that an air passage 16 is created between the lamp and the magnet. The exterior diameter of magnets 14, 15 is made substantially equal to the interior diameter of tube 3 so that no air can pass over the outside of the magnets.

In use, the ultra-violet tube is energized while air is introduced or drawn into the interior of tube 3 via inlet orifices 12. The high voltage field in the vicinity of electrodes 8, 9 is believed to sensitize or predispose the inflowing air to formation of ozone by ultra-violet irradiation.

In addition, magnets 14, 15, appear to condense the plasma within lamp 2 into those parts of the lamp surrounded by the magnets. Pressurized air passing through air gaps 16 is thereby irradiated with high intensity ultra-violet radiation and ozone is produced in that air very efficiently.

It is surmised that the high voltage field also produces some positive or negative ions which are swept through air gaps 16 under the influence of the magnetic fields associated with magnets 14, 15.

In one series of tests, ozone concentration was measured at outlet 13 by means of a KOMYO KITICHAWA ozone detector.

### Test 1

The apparatus was first operated using the ultra-violet lamp 2 alone and without application of the high voltage field between electrodes 8, 9. Magnets 15 were not energized. The concentration of ozone in the exit gas was measured at 6 ppm.

### Test 2

The apparatus was operated with the high voltage field applied between electrodes 8, 9 and without energizing the ultra-violet lamp 2, and without energizing the magnets 1, 5. No ozone was detected in the exit gas.

### Test 3

The apparatus was operated with magnets 15 alone and without energizing lamp 2 or applying high voltage between electrodes 8, 9. No ozone was detected in the exit gas.

### Test 4

The apparatus was operated with a high voltage applied between electrodes 8, 9 with magnets 15 energized and with lamp 2 off. No ozone was detected in the exit gas.

### Test 5

The apparatus was operated with lamp 2 and with a high voltage applied between electrodes 8, 9. Magnets 15 were not energized. The ozone concentration in the exit air was 64 ppm.

### Test 6

The apparatus was operated with lamp 2 on and with magnets 15 energized but without a voltage difference between electrodes 8, 9. The ozone concentration in the exit gas was 20 ppm.

### Test 7

The apparatus was operated with lamp 2 on, a high voltage applied between electrodes 8, 9 and with magnets 15 energized. Under these circumstances the ozone concentration in the exit gas was 80 ppm.

The results are summarized in Table I, which shows that lamp 2 when used alone produced about 6 ppm of ozone at a given air flow rate. Neither the high voltage field applied between electrodes 8, 9 nor the magnetic field in the absence of the ultra-voilet lamp produced any detectable ozone concentration at the same air flow.

Surprisingly, when a high voltage was applied between electrodes 8, 9 with lamp 2 on, the concentration of ozone produced increased by a factor of 10 while the energy consumption of the apparatus increased by about 20%.

When the electromagnets 14, 15 were energized a further increase of about 20% in ozone production was obtained. Tests 5, 6, 7 in accordance with the invention thus produce superior results to control tests 1, 2, 3 and 4.

**TABLE I**

| Test | Combination | Indicative Energy Consumption | Ozone concentration in air flow |
|---|---|---|---|
| 1 | UV lamp alone | 90 watts | 6 ppm |
| 2 | High Voltage alone | 17 watts | 0 ppm |
| 3 | Magnets alone | N/A | 0 ppm |
| 4 | High Voltage+Magnets | N/A | 0 ppm |
| 5 | UV Lamp+High voltage | 107 watts | 64 ppm |
| 6 | UV Lamp+Magnets | N/A | 20 ppm |
| 7 | UV Lamp+High voltage +Magnets | - | 80 ppm |

Tube 3 may be of material other than perspex and in fact stainless steel is preferred because of its reflective nature. If stainless steel is used care must be taken to provide proper insulation and isolation of parts.

### INDUSTRIAL APPLICATION

In a preferred embodiment of the invention, the ozone from the generator is used for water treatment. For that purpose, the generator of Figure 1 is enclosed in a stainless steel housing provided with an air intake fan and filters to exclude dust whereby atmospheric air is supplied to the inlet orifices 12 at a positive pressure.

Ozone bearing air is conducted by a stainless steel pipe from outlet 13 to an absorption unit outside the stainless steel housing wherein the ozone is absorbed in water to be treated.

Water decontamination is conveniently carried out in a water sluice unit into which contaminated water is sprayed and ozone pumped. Slanted sluice-screens are provided one above the other within the unit to ensure the flow of water over a large surface area while it is in contact with the ozone-enriched air. A sump collects debris swept into the chamber with the contaminated water. The decontaminated water escapes through a drain in the side of the chamber near the bottom, and a filter on the water outlet ensures that any debris entrained in the water stream is deflected back into the sump.

In comparison with prior art the present invention provides a simple, safe and efficient means of generating ozone.

## Claims

1. An ozone generator comprising:
an ultraviolet lamp (2);
means for directing a flow of an oxygen-containing gas through a zone at which the gas is exposed to ultraviolet radiation emanating from the lamp, and
means (8,9) for subjecting the gas to a voltage exceeding 5000 V across an electrode gap exceeding 200 mm and to a low-current electric field at which there is no visible discharge prior to or during exposure to the ultraviolet radiation.

2. Apparatus according to Claim 1, comprising a housing (3) surrounding the lamp, the housing having a gas inlet (12) and a gas outlet (13) whereby a gas admitted at the inlet is exposed to ultraviolet radiation in travelling between the inlet and the outlet,
and at least two spaced-apart electrodes (8,9) between which the electric voltage is applied.

3. Apparatus according to Claim 2, wherein the lamp (2) is elongate and the housing (3) tubular, the zone extending between the lamp and the housing.

4. Apparatus according to Claim 2 or 3, wherein the inlet is at or adjacent one of the electrodes.

5. Apparatus according to any one of Claims 2 to 4, wherein the outlet is intermediate the two spaced-apart electrodes.

6. Apparatus according to any one of Claims 2 to 5, wherein the voltage between the electrodes exceeds 15000 V.

7. Apparatus according to any one of Claims 2 to 6, wherein the electrodes are rod electrodes (8).

8. An ozone generator according to any preceding Claim, comprising at least one magnet (14, 15) associated with the lamp such that, in use, ionized particles within the lamp are influenced by a magnetic field to congregate in one or more localised regions whereby to concentrate the ultra-violet radiation emanating from the lamp in a zone, and means for directing the gas to flow through the zone.

9. Apparatus according to Claim 8, wherein the magnet is one of a pair of magnets (14, 15) disposed with like poles facing one another.

10. Apparatus according to Claim 8 or 9, wherein the magnet is spaced from the exterior of the lamp to form a gap, and wherein the magnet concentrates ultra-violet radiation in the gap so that air passing through the gap experiences a high intensity of radiation.

11. Apparatus according to any preceding Claim, wherein the magnet is toroidal and encircles a portion of the lamp, being spaced from the lamp to form an annular gap.

12. A method for generating ozone, comprising the steps of:
directing a flow of an oxygen-containing gas through a zone at which the gas is exposed to ultraviolet radiation emanating from a lamp, and
exposing the gas to a voltage exceeding 5000 V across an electrode gap exceeding 200 mm and to a low-current electric field at which there is no visible discharge prior to or during exposure to the ultraviolet radiation.

13. A method according to Claim 12, further including the steps of subjecting ionized particles within the lamp to a magnetic field effective to congregate the ions in one or more localised regions whereby to concentrate the ultraviolet radiation emanating from the lamp in a zone, and directing the gas through the zone.

## Patentansprüche

1. Ozongenerator mit:
einer ultravioletten Lampe (2);
Mitteln zur Richtung eines Stroms sauerstoffhaltigen Gases durch eine Zone, in welcher das Gas einer von der Lampe ausgehenden ultravioletten Strahlung ausgesetzt wird,
und Mitteln (8,9) zum Beaufschlagen des Gases mit einer Spannung über 5.000 V über einen Elektrodenspalt größer 200 mm und mit einem elektrischen Niedrigstromfeld, bei welchem es keine sichtbare Entladung vor oder während der Aussetzung der ultravioletten Strahlung gibt.

2. Generator nach Anspruch 1,
mit einem die Lampe umgebenden Gehäuse (3), wobei das Gehäuse einen Gaseinlaß (12) und einen Gasauslaß (13) aufweist, wobei ein am Einlaß eingelassenes Gas beim Durchtritt zwischen dem Einlaß und dem Auslaß der ultravioletten Strahlung ausgesetzt wird, und mit wenigstens zwei beabstandeten Elektroden (8,9), zwischen denen die elektrische Spannung angewendet wird.

3. Generator nach Anspruch 2,
wobei die Lampe (2) länglich und das Gehäuse (3) rohrförmig ausgebildet ist, wobei sich die Zone zwischen der Lampe und dem Gehäuse erstreckt.

4. Generator nach Anspruch 2 oder 3,
dadurch gekennzeichnet,
wobei der Einlaß sich am oder benachbart zu einer der Elektroden befindet.

5. Generator nach irgendeinem der Ansprüche 2 bis 4,
wobei der Auslaß zwischen den beiden beabstandeten Elektroden angeordnet ist.

6. Generator nach irgendeinem der Ansprüche 2 bis 5,
wobei die Spannung zwischen den Elektroden 15.000 V übersteigt.

7. Generator nach irgendeinem der Ansprüche 2 bis 6,
wobei die Elektroden Stabelektroden (8) sind.

8. Ozongenerator nach irgendeinem vorangehenden Anspruch,
mit wenigstens einem Magneten (14,15), der mit der Lampe derart verbunden ist, daß im Gebrauch ionisierte Partikel innerhalb der Lampe durch das Magnetfeld beeinflußt werden, um in eine oder mehrere lokalisierte Regionen zu wandern, um dabei die von der Lampe ausgehende ultraviolette Strahlung in einer Zone zu konzentrieren, und mit Mitteln zur Richtung des Gasfstromes durch diese Zone.

9. Generator nach Anspruch 8,
wobei der Magnet einer eines Paars von Magneten (14,15) ist, die mit entsprechend gegenüberliegenden Polen angeordnet sind.

10. Generator nach Anspruch 8 oder 9,
wobei der Magnet vom Äußeren der Lampe beabstandet ist, um einen Spalt zu bilden, und wobei der Magnet die ultraviolette Strahlung in dem Spalt konzentriert, so daß durch diesen Spalt hindurchtretende Luft eine hohe Strahlungsintensität erfährt.

11. Generator nach irgendeinem vorangehenden Anspruch,
wobei der Magnet ringförmig ist und einen Bereich der Lampe umschließt und dabei zur Bildung eines ringförmigen Spaltes von der Lampe beabstandet ist.

12. Verfahren zur Erzeugung von Ozon mit folgenden Schritten:
Richten eines Stromes sauerstoffhaltigen Gases durch eine Zone, in welcher das Gas einer von einer Lampe ausgehenden ultravioletten Strahlung ausgesetzt wird, und
Beaufschlagen des Gases mit einer Spannung größer 5.000 V über einen Elektronenspalt größer 200 mm und mit einem elektrischen Niedrigstromfeld, bei welchem es keine sichtbare Entladung vor oder während der Aussetzung der ultravioletten Strahlung gibt.

13. Verfahren nach Anspruch 12,
wobei zusätzlich ionisierte Partikel innerhalb der Lampe einem Magnetfeld ausgesetzt werden, das wirksam ist, um die Ionen in eine oder mehrere lokalisierte Regionen wandern zu lassen und dadurch die von der Lampe ausgehende ultraviolette Strahlung in einer Zone zu konzentrieren, und wobei das Gas durch diese Zone gerichtet wird.

## Revendications

1. Générateur d'ozone comprenant:
- une lampe à ultraviolets (2);
- des moyens pour envoyer un flux de gaz contenant de l'oxygène à travers une zone où le gaz est exposé à un rayonnement ultraviolet émanant de la lampe, et
- des moyens (8, 9) pour soumettre le gaz à une tension supérieure à 5 000 Volts dans un intervalle entre électrodes supérieur à 200 millimètres et à un champ électrique à faible courant où il n'y a pas de décharge visible avant ou pendant l'exposition au rayonnement ultraviolet.

2. Appareil selon la revendication 1, comprenant un boîtier (3) entourant la lampe, le boîtier ayant une entrée de gaz (12) et une sortie de gaz (13) de sorte que du gaz admis à l'entrée est exposé au rayonnement ultraviolet pendant son trajet entre l'entrée et la sortie,
- et au moins deux électrodes écartées l'une de l'autre (8, 9), entre lesquelles la tension électrique est appliquée.

3. Appareil selon la revendication 2, dans lequel la lampe (2) est allongée et le boîtier (3) est tubulaire, la zone s'étendant entre la lampe et le boîtier.

4. Appareil selon la revendication 2 ou 3, dans lequel l'entrée est sur l'une des électrodes ou adjacente à celle-ci.

5. Appareil selon l'une quelconque des revendications 2 à 4, dans lequel la sortie est en position intermédiaire par rapport aux deux électrodes écartées l'une de l'autre.

6. Appareil selon l'une quelconque des revendications 2 à 5, dans lequel la tension entre les électrodes dépasse 15 000 Volts.

7. Appareil selon l'une quelconque des revendications 2 à 6, dans lequel les électrodes sont des électrodes en forme de tige (8).

8. Générateur d'ozone selon l'une quelconque des revendications précédentes, comprenant au moins un aimant (14, 15) associé à la lampe de façon que, en service, des particules ionisées dans la lampe sont influencées par un champ magnétique pour se rassembler dans une ou plusieurs régions localisées de façon à concentrer le rayonnement ultraviolet émanant de la lampe dans une zone, et des moyens pour envoyer le gaz s'écouler à travers cette zone.

9. Appareil selon la revendication 8, dans lequel l'aimant est l'un de deux aimants (14, 15) disposés avec des pôles semblables se faisant face.

10. Appareil selon la revendication 8 ou 9, dans lequel l'aimant est espacé de l'extérieur de la lampe pour former un intervalle, et dans lequel l'aimant concentre le rayonnement ultraviolet dans l'intervalle de sorte que de l'air passant à travers l'intervalle subit une forte intensité de rayonnement.

11. Appareil selon l'une quelconque des revendications précédentes, dans lequel l'aimant est toroïdal et encercle une partie de la lampe en étant écarté de la lampe pour former un intervalle annulaire.

12. Procédé pour générer de l'ozone, comprenant les étapes suivantes:
- envoyer un flux de gaz contenant de l'oxygène à travers une zone où le gaz est exposé à un rayonnement ultraviolet émanant d'une lampe, et
- exposer le gaz à une tension supérieure à 5 000 volts dans un intervalle entre électrodes dépassant 200 millimètres et à un champ électrique à faible courant sous lequel il n'y a pas de décharge visible avant ou pendant l'exposition au rayonnement ultraviolet.

13. Procédé selon la revendication 12, comprenant en outre les étapes consistant à soumettre des particules ionisées à l'intérieur de la lampe à un champ magnétique ayant pour effet de rassembler les ions dans une ou plusieurs régions localisées de façon à concentrer le rayonnement ultraviolet émanant de la lampe dans une zone, et à diriger le gaz à travers cette zone.
